# EUROPEAN PATENT APPLICATION

(11) **EP 4 654 682 A1**
(43) Date of publication of application: **26.11.2025**
(21) Application number: 24752645.2
(22) Date of filing: 10.01.2024
(51) Int. Cl.: H04W 60/00

(54) **COMMUNICATION METHOD AND APPARATUS**

(30) Priority: 09.02.2023 CN 202310137266; 07.04.2023 CN 202310413423
(71) Applicant: Huawei Technologies Co., Ltd., Shenzhen, Guangdong 518129 (CN)
(72) Inventor: LI, Haoran, Shenzhen, Guangdong 518129 (CN); XU, Yishan, Shenzhen, Guangdong 518129 (CN)
(74) Representative: Goddar, Heinz J.
(86) International application number: PCT/CN2024/071584
(87) International publication number: WO 2024/164787

(57) **Abstract**

This application relates to the communication field, and in particular, to a network access method and apparatus. The solutions may be applied to a communication system including a terminal that does not support non-access stratum signaling, for example, the terminal is an N5CW device, or may be applied to a communication system including a non-3GPP access network device, for example, the access network device is a TWAN device. In the method, an access network device may obtain an identifier of a home network of a terminal and an identifier of a target network. The identifier of the target network may be for determining an AMF, and the identifier of the home network may be for determining an AUSF, to ensure that the terminal can be successfully registered with a network when accessing the network through a non-3GPP access network device, so as to improve network access reliability.

## Description

This application claims priorities to Chinese Patent Application No. 202310137266.X, filed with the China National Intellectual Property Administration on February 9, 2023 and entitled "COMMUNICATION METHOD AND APPARATUS", and to Chinese Patent Application No. 202310413423.5, filed with the China National Intellectual Property Administration on April 7, 2023 and entitled "COMMUNICATION METHOD AND APPARATUS", both of which are incorporated herein by reference in their entireties.

### TECHNICAL FIELD

Embodiments of this application relate to the communication field, and more specifically, to a communication method and a communication apparatus.

### BACKGROUND

Currently, in a 5th generation mobile communication technology (the 5th generation mobile communication technology, 5G), a terminal accesses a 5G network by using non-access stratum (non-access stratum, NAS) signaling. When a non-5G-capable over WLAN (non-5G-capable over WLAN, N5CW) device accesses a network through a wireless local area network (wireless local area network, WLAN), because the device does not support NAS signaling, the device needs to access the network through a trusted non-3GPP access network device. However, when the network selected by the N5CW device for access is not a home network of the N5CW device, the N5CW device cannot be successfully registered.

Therefore, how to ensure that a terminal can be successfully registered with a network when accessing the network through a non-3GPP access network device becomes an urgent problem to be resolved in the industry.

### SUMMARY

This application provides a communication method, so that a terminal can be successfully registered with a network when accessing the network through a non-3GPP access network device.

According to a first aspect, a communication method is provided, applied to a first device, where the first device is a non-3rd generation partnership project 3GPP access network device. The communication method includes: receiving first information from a second device, where the first information includes first identification information, second identification information, and third identification information, the first identification information indicates the second device, the second identification information indicates a home network of the second device, and the third identification information indicates a target network of the second device; determining an access and mobility management function device based on the third identification information; sending registration request information to the access and mobility management function device, where the registration request information includes the first identification information and the second identification information; and receiving registration response information from the access and mobility management function device, where the registration response information indicates a registration result.

In this application, the first device obtains the three pieces of identification information from the second device, where the three pieces of identification information respectively indicate the second device, the home network of the second device, and the target network of the second device. The second device is a terminal that is to access the target network, the home network of the second device is a network in which subscription data of the second device is located, and the target network of the second device is a network that the second device selects to access. For example, the second device may be an N5WC device, and the first device is a trusted non-3GPP access network device. The first device registers the second device based on the foregoing three pieces of identification information. Specifically, the first device determines the access and mobility management function device based on the identification information corresponding to the target network of the second device, and sends, to the access and mobility management function device, the identification information corresponding to the second device and the target network, so that the access and mobility management function device can determine an authentication server function device and authenticate the second device, to implement registration of the second device.

In a possible implementation, the first information includes a subscription permanent identifier (subscription permanent identifier, SUPI) or a subscription concealed identifier (subscription concealed identifier, SUCI). The subscription concealed identifier is a privacy protection identifier including a concealed subscription permanent identifier, and the SUPI may include the foregoing three types of identification information. For example, a form of the SUPI is a network access identifier (network access identifier, NAI).

In a possible implementation, a form of the NAI may be "homerealm!username@otherrealm", where information about a user name (username) corresponds to the first identification information, information about a home realm (homerealm) corresponds to the second identification information, and information about another realm (otherrealm) corresponds to the third identification information. For example, a specific form of the NAI is:
"nai.5gc-nn.mnc<homeMNC>.mcc<homeMCC>.3gppnetwork.org!<username of SUCI in NAI format>@nai.5gc-nn.mnc<visitedMNC>.mec<visitedMCC>.3gppnetwork.org".

username of SUCI in NAI format may be the first identification information, and indicates the second device. mnc<homeMNC>.mcc<homeMCC> may be the second identification information, and indicates the home network of the second device. mnc<visitedMNC>.mcc<visitedMCC> may be the third identification information, and indicates the target network of the second device. In addition, 5gc-nn may indicate the device to access the network by using a 5G connection (5G connectivity-without-NAS) that does not support non-access stratum NAS signaling.

Based on the foregoing solution, the access network device implements registration of the second device by obtaining the identification information corresponding to the terminal, the identification information corresponding to the home network of the terminal, and the identification information corresponding to the target network of the terminal, so that it can be ensured that the terminal accesses the network through the non-3GPP access network device, to improve working accuracy and efficiency of the contact network device. Further, this solution has a small modification on an existing device, and is convenient for promotion and deployment. In addition, the three pieces of identification information in this application may be combined into one piece of information for sending, to save resources.

With reference to the first aspect, in some implementations of the first aspect, network identifiers of the target network and the home network are different.

In this application, the network identifier includes a mobile country code (mobile country code, MCC) and a mobile network code (mobile network code, MNC). If the network identifier is in a standalone non-public network scenario, the network identifier further includes a network identification (network identification, NID).

For example, a form of the network identifier may be:
"nid<NID>.mnc<MNC>.mcc<MCC>.3gppnetwork.org".

In a possible implementation, that network identifiers of the target network and the home network are different indicates that the target network and the home network belong to different operators.

Based on the foregoing solution, the first information indicates the target network and the home network of the second device, so that when the target network and the home network are different, the first device can determine the access and mobility management function device based on the identifier of the target network, and the access and mobility management function device can determine the authentication server function device based on the identifier of the home network, to implement registration of the second device and ensure reliability of accessing the target network through the non-3GPP access network device.

With reference to the first aspect, in some implementations of the first aspect, the non-3rd generation partnership project 3GPP access network device includes a trusted wireless local area network access network device.

With reference to the first aspect, in some implementations of the first aspect, the trusted wireless local area network access network device includes a trusted wireless local area network access point device and a trusted wireless local area network interworking function device.

The trusted wireless local area network access network (trusted WLAN access network, TWAN) device may include the trusted wireless local area network access point (trusted WLAN access point, TWAP) device and the trusted wireless local area network interworking function (trusted WLAN interworking function, TWIF) device. The TWIF device may include a trusted wireless local area network interworking function-control plane (trusted WLAN interworking function-control plane, TWIF-CP) device and a trusted wireless local area network interworking function-user plane (trusted WLAN interworking function-user plane, TWIF-UP) device, and the TWIF-CP device and the TWIF-UP device exchange tunnel information.

Specifically, the trusted wireless local area network access point device receives the first information from the second device, and transmits the first information to the trusted wireless local area network interworking function device. The trusted wireless local area network interworking function device determines the access and mobility management function device based on the first information, and sends the registration request information to the access and mobility management function device.

With reference to the first aspect, in some implementations of the first aspect, the method further includes: generating the registration request information based on the first information.

In a possible implementation, the first device generates the registration request information based on the first identification information and the second identification information in the first information. The registration request information includes the SUPI, and a form of an NAI of the SUPI may be "<5G_device_unique_identity>@nai.5gc-nn.mnc<MNC>.mcc<MCC>.3gppnetwork.org". 5G_device_unique_identity corresponds to the first identification information, and mnc<MNC>.mcc<MCC> corresponds to the second identification information.

With reference to the first aspect, in some implementations of the first aspect, the first information further includes first indication information, where the first indication information indicates that the second device accesses the target network through a connection that does not support non-access stratum NAS signaling.

The first indication information indicates that the second device accesses the target network by using a 5G connection (5G connectivity-without-NAS) that does not support non-access stratum NAS signaling. In a possible implementation, the first indication information corresponds to "5gc-nn" in the foregoing NAI.

With reference to the first aspect, in some implementations of the first aspect, a format of the first information is a decorated network access identifier (Decorated NAI).

With reference to the first aspect, in some implementations of the first aspect, the registration request information includes information in a format of a network access identifier, and the information in the format of the network access identifier includes the first identification information and the second identification information.

According to a second aspect, a communication method is provided, including: A second device sends first information to a first device, where the first information includes first identification information, second identification information, and third identification information, the first identification information indicates the second device, the second identification information indicates a home network of the second device, the third identification information indicates a target network of the second device, and the first device is a non-3rd generation partnership project 3GPP access network device; and the first device determines an access and mobility management function device based on the third identification information, and sends registration request information to the access and mobility management function device, where the registration request information includes the first identification information and the second identification information.

With reference to the second aspect, in some implementations of the second aspect, the method further includes: The access and mobility management function device determines an authentication server function device based on the second identification information, and authenticates the second device; and the access and mobility management function device sends registration response information to the first device.

With reference to the second aspect, in some implementations of the second aspect, network identifiers of the target network and the home network are different.

With reference to the second aspect, in some implementations of the second aspect, the non-3rd generation partnership project 3GPP access network device includes a trusted wireless local area network access network device.

With reference to the second aspect, in some implementations of the second aspect, the trusted wireless local area network access network device includes a trusted wireless local area network access point device and a trusted wireless local area network interworking function device.

With reference to the second aspect, in some implementations of the second aspect, the method further includes: The first device generates the registration request information based on the first information.

With reference to the second aspect, in some implementations of the second aspect, the first information further includes first indication information, where the first indication information indicates that the second device accesses the target network through a connection that does not support non-access stratum NAS signaling.

With reference to the second aspect, in some implementations of the second aspect, a format of the first information is a decorated network access identifier.

With reference to the second aspect, in some implementations of the second aspect, the registration request information includes information in a format of a network access identifier, and the information in the format of the network access identifier includes the first identification information and the second identification information.

According to a third aspect, a communication method is provided, applied to an access and mobility management function device. The communication method includes: receiving first registration request information from a first device, where the first device is a non-3rd generation partnership project 3GPP access network device, the first registration request information is used to request to register a second device, the first registration request information includes first identification information, second identification information, and third identification information, the first identification information indicates the second device, the second identification information indicates a home network of the second device, the third identification information indicates a target network of the second device, and the first device is the non-3rd generation partnership project 3GPP access network device; determining an authentication server function device based on the second identification information, and authenticating the second device; and sending first registration response information to the first device.

In the foregoing solution, the access and mobility management function device may obtain the identification information of the corresponding home network, so that the authentication server function device can be selected and a terminal can be authenticated. This ensures that the terminal can access the network through the non-3GPP access network device, and improves a network access success rate and reliability.

With reference to the third aspect, in some implementations of the third aspect, network identifiers of the target network and the home network are different.

According to a fourth aspect, a communication method is provided, including: A first device sends first registration request information to an access and mobility management function device, where the first registration request information is used to request to register a second device, the first registration request information includes first identification information, second identification information, and third identification information, the first identification information indicates the second device, the second identification information indicates a home network of the second device, the third identification information indicates a target network of the second device, and the first device is a non-3rd generation partnership project 3GPP access network device; the access and mobility management function device determines an authentication server function device based on the second identification information, and authenticates the second device; and the access and mobility management function device sends first registration response information to the first device.

With reference to the fourth aspect, in some implementations of the fourth aspect, network identifiers of the target network and the home network are different.

With reference to the fourth aspect, in some implementations of the fourth aspect, the non-3rd generation partnership project 3GPP access network device is a trusted wireless local area network access network device.

With reference to the fourth aspect, in some implementations of the fourth aspect, the trusted wireless local area network access network device includes a trusted wireless local area network access point device and a trusted wireless local area network interworking function device.

With reference to the fourth aspect, in some implementations of the fourth aspect, the method further includes: The second device sends first information to the first device, where the first information includes the first identification information, the second identification information, and the third identification information; and the first device generates the first registration request information based on the first information.

With reference to the fourth aspect, in some implementations of the fourth aspect, the first information further includes first indication information, where the first indication information indicates that the second device accesses the target network through a connection that does not support non-access stratum NAS signaling.

According to a fifth aspect, a communication apparatus is provided, where the communication apparatus is a non-3rd generation partnership project 3GPP access network device, and includes a transceiver unit and a processing unit. The transceiver unit is configured to receive first information from a second device, the first information includes first identification information, second identification information, and third identification information, the first identification information indicates the second device, the second identification information indicates a home network of the second device, and the third identification information indicates a target network of the second device. The processing unit is configured to determine an access and mobility management function device based on the third identification information. The transceiver unit is further configured to send registration request information to the access and mobility management function device, where the registration request information includes the first identification information and the second identification information. The transceiver unit is further configured to receive registration response information from the access and mobility management function device, where the registration response information indicates a registration result.

With reference to the fifth aspect, in some implementations of the fifth aspect, network identifiers of the target network and the home network are different.

With reference to the fifth aspect, in some implementations of the fifth aspect, the non-3rd generation partnership project 3GPP access network device includes a trusted wireless local area network access network device.

With reference to the fifth aspect, in some implementations of the fifth aspect, the trusted wireless local area network access network device includes a trusted wireless local area network access point device and a trusted wireless local area network interworking function device.

With reference to the fifth aspect, in some implementations of the fifth aspect, the apparatus further includes: generating the registration request information based on the first information.

With reference to the fifth aspect, in some implementations of the fifth aspect, the first information further includes first indication information, where the first indication information indicates that the second device accesses the target network through a connection that does not support non-access stratum NAS signaling.

With reference to the fifth aspect, in some implementations of the fifth aspect, a format of the first information is a decorated network access identifier.

With reference to the fifth aspect, in some implementations of the fifth aspect, the registration request information includes information in a format of a network access identifier, and the information in the format of the network access identifier includes the first identification information and the second identification information.

According to a sixth aspect, a communication apparatus is provided, including a transceiver unit and a processing unit. The transceiver unit is configured to receive first registration request information from a first device, the first device is a non-3rd generation partnership project 3GPP access network device, the first registration request information is used to request to register a second device, the first registration request information includes first identification information, second identification information, and third identification information, the first identification information indicates the second device, the second identification information indicates a home network of the second device, the third identification information indicates a target network of the second device, and the first device is the non-3rd generation partnership project 3GPP access network device. The processing unit is configured to determine an authentication server function device based on the second identification information, and authenticate the second device. The transceiver unit is further configured to send first registration response information to the first device.

With reference to the sixth aspect, in some implementations of the sixth aspect, network identifiers of the target network and the home network are different.

According to a seventh aspect, a communication system is provided, including a first device and a second device. The second device is configured to send first information to the first device, where the first information includes first identification information, second identification information, and third identification information, the first identification information indicates the second device, the second identification information indicates a home network of the second device, the third identification information indicates a target network of the second device, and the first device is a non-3rd generation partnership project 3GPP access network device. The first device is configured to determine an access and mobility management function device based on the third identification information, and send registration request information to the access and mobility management function device, where the registration request information includes the first identification information and the second identification information.

With reference to the seventh aspect, in some implementations of the seventh aspect, the system further includes the access and mobility management function device. The access and mobility management function device is configured to determine an authentication server function device based on the second identification information, and authenticate the second device. The access and mobility management function device is further configured to send registration response information to the first device.

According to an eighth aspect, a communication system is provided, including a first device and an access and mobility management function device.

The first device is configured to send first registration request information to the access and mobility management function device, where the first registration request information is used to request to register a second device, the first registration request information includes first identification information, second identification information, and third identification information, the first identification information indicates the second device, the second identification information indicates a home network of the second device, the third identification information indicates a target network of the second device, and the first device is a non-3rd generation partnership project 3GPP access network device. The access and mobility management function device is configured to determine an authentication server function device based on the second identification information, and authenticate the second device. The access and mobility management function device is further configured to send first registration response information to the first device.

With reference to the eighth aspect, in some implementations of the eighth aspect, the system further includes the second device. The second device is configured to send first information to the first device, where the first information includes the first identification information, the second identification information, and the third identification information.

According to a ninth aspect, a communication apparatus is provided, including a processor, configured to execute a computer program stored in a memory, to enable the communication apparatus to perform the communication method in any one of the first aspect to the fourth aspect.

According to a tenth aspect, a chip is provided, including a processor, configured to invoke a computer program from a memory and run the computer program, to enable a communication device on which the chip system is installed to perform the communication method in the first aspect and/or the second aspect.

According to an eleventh aspect, a computer program is provided. When the computer program is executed by a communication apparatus, the communication method in any one of the first aspect to the fourth aspect is implemented.

According to a twelfth aspect, a computer-readable storage medium is provided. The computer-readable storage medium stores a computer program, and when the computer program is run on a computer, the computer is enabled to implement the communication method in any one of the first aspect to the fourth aspect.

### BRIEF DESCRIPTION OF DRAWINGS

FIG. 1 is a schematic of a network architecture to which a technical solution of this application may be applied;
FIG. 2 is an example of a TWAN;
FIG. 3 is a schematic of performing non-3GPP access based on a TWAN;
FIG. 4 is a schematic of a communication method 400 according to this application;
FIG. 5 is a schematic of another communication method 500 according to this application;
FIG. 6 is a schematic of still another communication method 600 according to this application;
FIG. 7 is a schematic of a structure of an apparatus according to an embodiment of this application; and
FIG. 8 is another schematic of a structure of an apparatus according to an embodiment of this application.

### DESCRIPTION OF EMBODIMENTS

The following describes technical solutions of embodiments in this application with reference to accompanying drawings.

The technical solutions of embodiments of this application may be applied to various communication systems, for example, a global system of mobile communication (global system of mobile communication, GSM) system, a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, and a 5th generation (5th generation, 5G) communication system or new radio (new radio, NR), or a future 6th generation (6th generation, 6G) system.

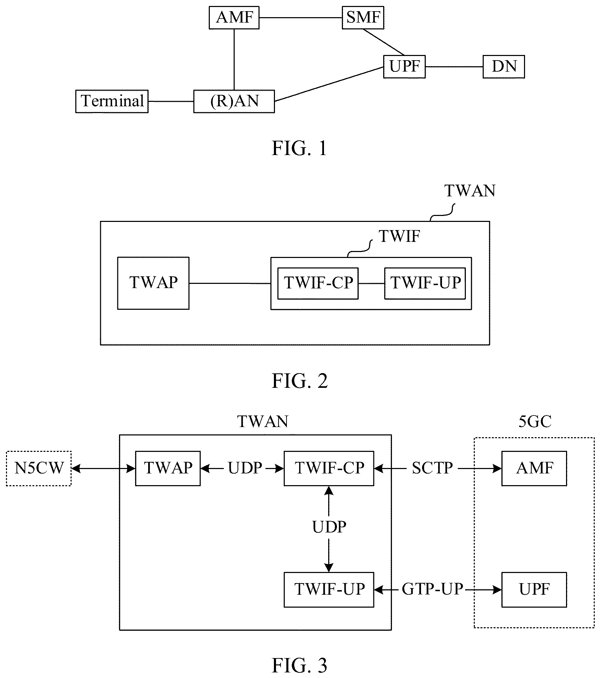

For example, FIG. 1 is a schematic of a network architecture.

As shown in FIG. 1, a 5G system (the 5th generation system, 5GS) is used as an example of the network architecture. The network architecture includes an access and mobility management network element and a session management function network element. In addition, during normal running of the system, the system may further interact with a user plane network element, a terminal, a (radio) access network ((radio) access network, (R)AN) device, a data network (data network, DN), and the like.

The following briefly describes each network element related in FIG. 1.

### 1. Access and mobility management network element

The access and mobility management network element is mainly used for attachment, mobility management, and a tracking area update procedure of a terminal in a mobile network. The access management network element terminates a non-access stratum (non-access stratum, NAS) message, completes registration management, connection management, reachability management, allocates a tracking area list (tracking area list, TA list), completes mobility management and the like, and transparently routes a session management (session management, SM) message to the session management network element. In 5G, the access and mobility management network element may be an access and mobility management function (access and mobility management function, AMF).

### 2. Session management network element

The session management network element is mainly used for session management in a mobile network, for example, session establishment, modification, and release. A specific function is, for example, allocating an internet protocol (internet protocol, IP) address to the terminal or selecting a user plane network element that provides a packet forwarding function. In 5G, the session management network element may be a session management function (session management function, SMF).

### 3. User plane network element

The user plane network element is mainly used for processing a user packet, for example, forwarding, charging, or lawful interception. The user plane network element may also be referred to as a protocol data unit (protocol data unit, PDU) session anchor (PDU session anchor, PSA). In 5G, the user plane network element may be a user plane function (user plane function, UPF).

### 4. Terminal

The terminal is a device having a wireless transceiver function. The terminal may be deployed on land, including indoors or outdoors, or may be hand-held, wearable, or vehicle-mounted; may be deployed on a water surface (for example, on a ship); or may be deployed in the air (for example, on an airplane, a balloon, or a satellite).

The terminal in embodiments of this application may also be referred to as a user equipment (user equipment, UE), a user, an access terminal, a subscriber unit, a subscriber station, a mobile station, a remote station, a remote terminal, a mobile device, a user terminal, a terminal, a wireless communication device, a user agent, a user apparatus, or the like. The terminal may be a mobile phone (mobile phone), a tablet computer (Pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application.

By way of example, and not limitation, in embodiments of this application, the terminal may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal may alternatively be a terminal in an internet of things (Internet of Things, IoT) system. The IoT is an important component of future information technology development, and a main technical feature of the IoT is connecting objects to a network by using a communication technology, to implement an intelligent network in which humans and computers are interconnected and things are interconnected.

In a possible implementation, the terminal in embodiments of this application may be a non-5G-capable over WLAN (non-5G-capable over WLAN, N5CW) device. The N5CW device is a device that does not support 5G NAS signaling when accessing a 5G core network by using a WLAN. The N5CW device does not support 5G-NAS signaling only when the N5CW device accesses the network by using a WLAN. The N5CW device may function as a 5G UE to interact with a next generation radio access network (next generation radio access network, NG-RAN) and access a core network by using 3GPP access, or may access a 5G core network by using trusted non-3GPP access.

### 5. (R)AN device

The (R)AN device is configured to be responsible for wireless side access of a terminal. The (R)AN device may be a base station (base station), an evolved NodeB (evolved NodeB, eNodeB), a transmission-reception point (transmission reception point, TRP), a next generation NodeB (next generation NodeB, gNB) in a 5G mobile communication system, a next generation NodeB in a 6th generation (6th generation, 6G) mobile communication system, a base station in a future mobile communication system, or the like; or may be a module or unit that completes some functions of a base station, for example, may be a central unit (central unit, CU), a distributed unit (distributed unit, DU), an RRU, or a baseband unit (baseband unit, BBU). The (R)AN device may be a macro base station, a micro base station, an indoor base station, a relay node, a donor node, or the like.

In a possible implementation, if the terminal needs to access the 5G core network by using the trusted non-3GPP access, the (R)AN device may be a trusted wireless local area network access network (trusted WLAN access network, TWAN) device, and the TWAN device is a non-3GPP access network device.

FIG. 2 is an example of a TWAN.

As shown in FIG. 2, the TWAN may include a trusted wireless local area network access point (trusted WLAN access point, TWAP) device and a trusted wireless local area network interworking function (trusted WLAN interworking function, TWIF) device. The TWIF device may include a trusted wireless local area network interworking function-control plane (trusted WLAN interworking function-control plane, TWIF-CP) device and a trusted wireless local area network interworking function-user plane (trusted WLAN interworking function-user plane, TWIF-UP) device, and the TWIF-CP device and the TWIF-UP device exchange tunnel information. The TWAP device is configured to establish a connection to a terminal and forward information from the terminal to the TWIF. The TWIF is configured to interact with a core network based on the information from the terminal.

FIG. 3 is a schematic of performing non-3GPP access based on a TWAN.

As shown in FIG. 3, a TWAP establishes a connection to an NSCW device, forwards data of the N5CW device, and sends the data to a TWIF-CP by using a user datagram protocol (user datagram protocol, UDP) interface. The TWIF-CP establishes a stream control transmission protocol (stream control transmission protocol, SCTP) connection to a core network AMF network element. After receiving an access message sent by the TWAP, the TWIF-CP simulates and sends a NAS and an NGAP message, to trigger a core network terminal access procedure.

After a signaling plane connection is established, the TWIF-CP establishes a data path connection to the TWIF-UP, and a UDP interface between the TWIF-CP and the TWIF-UP sends GPRS tunneling protocol user plane (GPRS tunneling protocol user plane, GTP-UP) tunnel information of control signaling received by the TWIF-CP to the TWIF-UP, and the TWIF-UP completes GTP-UP tunnel encapsulation and decapsulation according to the interface information. After receiving the data of the TWAP, the TWIF-UP encapsulates a GTP-UP tunnel and forwards a data packet to a UPF in a core network.

### 6. Data network

The data network is mainly a carrier network that provides a data service for a terminal. For example, the internet (Internet), a third-party service network, and an IP multimedia service (IP multi-media service, IMS) network.

In the network architecture shown in FIG. 1, the network elements may communicate with each other through an interface. The interface between the network elements may be a point-to-point interface, or may be a service-based interface. This is not limited in this application.

It should be understood that the network architecture shown above is merely an example for description, and a network architecture applicable to embodiments of this application is not limited thereto. Any network architecture that can implement functions of the foregoing network elements is applicable to embodiments of this application.

It should be further understood that functions or the network elements shown in FIG. 1 may be understood as network elements configured to implement different functions, for example, may be combined into a network slice as required. These network elements may be independent devices, or may be integrated into a same device to implement different functions, or may be network components in a hardware device, or may be software functions running on dedicated hardware, or may be instantiated virtualization functions on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

The following describes in detail a communication method provided in embodiments of this application with reference to the accompanying drawings.

Embodiments provided in this application may be applied to the network architecture shown in FIG. 1. This is not limited.

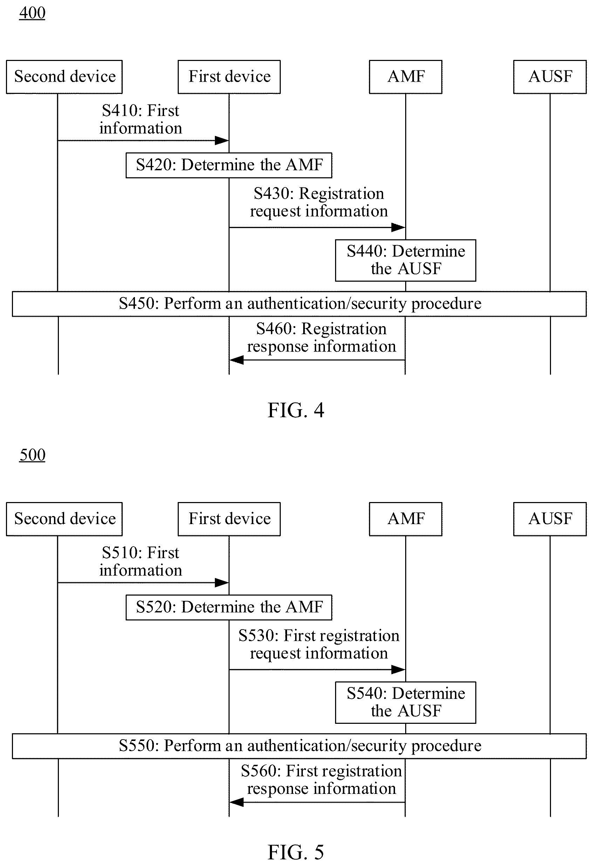

FIG. 4 is a schematic of a communication method 400 according to this application. The method 400 may be applied to a scenario in which a terminal accesses a core network by using a non-3GPP connection. The method 400 may be performed by the terminal, an access network device, an AMF, and an authentication server function (authentication server function, AUSF) device, or may be performed by modules or units in the terminal, an access network device, an AMF, and an AUSF. In this application, the terminal is a terminal that can support the non-3GPP connection, and the access network device is a non-3GPP access network device. For example, the terminal may be an N5CW device, and the access network device may be a TWAN device. For ease of description, the non-3GPP access network device is referred to as a first device, the terminal that supports the non-3GPP connection is referred to as a second device, and the network that the second device needs to access through the first device is referred to as a target network below.

The method 400 may include at least a part of the following content.

S410: The second device sends first information to the first device, where the first information includes first identification information, second identification information, and third identification information, the first identification information indicates the second device, the second identification information indicates a home network of the second device, and the third identification information indicates the target network of the second device.

In this application, the second identification information and the third identification information both belong to network identification information, and the network identification information may include a mobile country code (mobile country code, MCC) and a mobile network code (mobile network code, MNC). If the network identification information is in a standalone non-public network scenario, the network identification information further includes a network identification (network identification, NID).

In a possible implementation, the first information includes a subscription permanent identifier (subscription permanent identifier, SUPI) or a subscription concealed identifier (subscription concealed identifier, SUCI). The subscription concealed identifier is a privacy protection identifier including a concealed subscription permanent identifier, and the SUPI may include the foregoing three types of identification information. For example, a form of the SUPI is a network access identifier (network access identifier, NAI).

A format of the NAI may be "homerealm!username@otherrealm", where information about a user name corresponds to the first identification information, information about a home realm (homerealm) corresponds to the second identification information, and information about another realm (otherrealm) corresponds to the third identification information.

For example, a specific format of the NAI is:
"nai.5gc-nn.mnc<homeMNC>.mcc<homeMCC>.3gppnetwork.org!<username of SUCI in NAI format>@nai.5gc-nn.mnc<visitedMNC>.mcc<visitedMCC>.3gppnetwork.org".

username of SUCI in NAI format may correspond to the first identification information, and indicates the second device. mnc<homeMNC>.mcc<homeMCC> may correspond to the second identification information, and indicates the home network of the second device. mnc<visitedMNC>.mcc<visitedMCC> may correspond to the third identification information, and indicates the target network of the second device. In addition, 5gc-nn in the NAI indicates the device to access the network by using a 5G connection (5G connectivity-without-NAS) that does not support non-access stratum NAS signaling.

In a possible implementation, the first information includes a subscription concealed identifier (subscription concealed identifier, SUCI). The subscription concealed identifier is a privacy protection identifier including a concealed subscription permanent identifier, and the SUCI may include the foregoing three types of identification information. For example, a format of the SUCI is a network access identifier (network access identifier, NAI).

A format of the NAI may be Decorated NAI: "homerealm!username@otherrealm", where information about a user name (username) corresponds to the first identification information, information about a home realm (homerealm) corresponds to the second identification information, information about another realm (otherrealm) corresponds to the third identification information, and Decorated NAI is a decorated NAI.

For example, a specific format of Decorated NAI is:
"nai.5gc-nn.mnc<homeMNC>.mcc<homeMCC>.3gppnetwork.org!<username of SUCI in NAI format>@nai.5gc-nn.mnc<visitedMNC>.mcc<visitedMCC>.3gppnetwork.org".

username of SUCI in NAI format may correspond to the first identification information, and indicates the second device. mnc<homeMNC>.mcc<homeMCC> may correspond to the second identification information, and indicates the home network of the second device. mnc<visitedMNC>.mcc<visitedMCC> may correspond to the third identification information, and indicates the target network of the second device. In addition, 5gc-nn in the NAI indicates the device to access the network by using a 5G connection (5G connectivity-without-NAS) that does not support non-access stratum NAS signaling.

In this embodiment of this application, network identification information of the target network and of the home network may be different. For example, the target network and the home network belong to different operators.

In a possible implementation, the first information includes an IKE authentication response (Authentication Response), the IKE authentication response is IKE_AUTH Res (EAP-Res/Identity NAI), the IKE authentication response carries an EAP identity response message, the EAP identity response message includes NAI information, and the NAI information includes the first identification information, the second identification information, and the third identification information.

The IKE authentication response may be sent by the second device based on an IKE authentication request from the first device. The IKE authentication request is IKE_AUTH Req(EAP-Res/Identity), and the IKE authentication request carries an EAP identity request message.

Before the first device sends the IKE authentication request, the method 400 may further include: The second device selects the first device and establishes a connection to the first device.

Specifically, the second device discovers a WLAN access network, and obtains a corresponding network list from the WLAN access network. For example, the second device may send an access network query protocol (access network query protocol, ANQP) to the WLAN access network. The WLAN access network needs to feed back a 3GPP cellular network to the second device, where the 3GPP cellular network includes a special network list, and a network included in the list supports a 5G connection (5G connectivity-without-NAS) that does not support non-access stratum NAS signaling.

The second device selects a network in the network list, selects a WLAN access network with a highest priority from all WLAN access networks that can be connected to the network, and determines that an access network device corresponding to the WLAN access network with the highest priority is the first device.

S420: The first device determines the AMF based on the third identification information.

Specifically, after receiving information, the first device parses the information. If the first device determines, through parsing, that the information includes a plurality of pieces of network identification information, the first device needs to determine a target network based on identification information corresponding to the target network, and select an AMF corresponding to the target network. If the information includes only one piece of network identification information, the first device directly determines the AMF based on the network identification information. In this embodiment of this application, the first information includes the second identification information and the third identification information, in other words, includes a plurality of pieces of network identification information. Therefore, the first device needs to determine the AMF based on the third identification information.

In a possible implementation, the second device sends the first message to the first device, where the first message includes NAI information, and a format of an NAI is Decorated NAI:
"nai.5gc-nn.mnc<homeMNC>.mcc<homeMCC>.3gppnetwork.org!<username of SUCI in NAI format>@nai.5gc-nn.mnc<visitedMNC>.mcc<visitedMCC>.3gppnetwork.org".

"<username of SUCI in NAI format>" corresponds to the first identification information, "nai.5gc-nn.mnc<homeMNC>.mcc<homeMCC>.3gppnetwork.org" corresponds to the second identification information, and "nai.5gc-nn.mnc<visitedMNC>.mcc<visitedMCC>.3gppnetwork.org" corresponds to the third identification information. After identifying that the second device provides Decorated NAI, the first device determines, based on the format of Decorated NAI, that network identification information after "@" is the identification information of the target network, determines the corresponding target network based on mnc<visitedMNC> and mcc<visitedMCC> therein, and selects the corresponding AMF in the target network.

For example, if the first device is the TWAN device, and includes a TWIF device and a TWAP device, the TWAP device receives the first information and transparently transmits the first information to the TWIF device, and the TWIF device performs determining and then selects the AMF.

In a possible implementation, the foregoing first information includes the second identification information and the third identification information, and the second identification information and the third identification information are different, in other words, the target network and the home network are different. For example, a network identifier in the second identification information and a network identifier in the third identification information are different.

S430: The first device sends registration request information to the AMF, where the registration request information includes the first identification information and the second identification information.

In a possible implementation, when the first information received by the first device is Decorated NAI "homerealm!username@otherrealm", the first device performs format conversion, and converts Decorated NAI into a regular NAI "username@homerealm", where "username" is the first identification information, and "homerealm" is the second identification information. That the TWIF converts the format of Decorated NAI into the NAI includes: removing the third identification information, in other words, removing otherrealm, moving the second identification information homerealm after "@", and removing "!". The first device sends the registration request information to the AMF, where the registration request information includes the converted NAI.

For example, the first information received by the TWIF is Decorated NAI, for example, "nai.5gc-nn.mnc<123>.mcc<456>.3gppnetwork.org!type1.rid678.schid0.useriduser17@nai.5gc-nn.mnc<345>.mcc<678>.3gppnetwork.org". The TWIF converts the format of Decorated NAI into an NAI "type1.rid678.schid0.useriduser17@nai.5gc-nn.mnc<123>.mcc<456>.3gppnetwork.org", and the TWIF sends the registration request message to the AMF, where the registration request message includes the NAI.

In a possible implementation, the first information received by the first device is Decorated NAI "homerealm!username@otherrealm". The first device generates a new NAI based on Decorated NAI, and a form of the new NAI is "username@homerealm", where username corresponds to the first identification information, and homerealm corresponds to the second identification information. The first device sends the registration request information to the AMF, where the registration request information includes the NAI.

In a possible implementation, the first device generates a new SUPI. An NAI format of the new SUPI is "<5G_device_unique_identity>@nai.5gc-nn.mnc<MNC>.mcc<MCC>.3gppnetwork.org", 5G_device_unique_identity corresponds to the first identification information, and mnc<MNC>.mcc<MCC> corresponds to the second identification information. The first device sends the registration request information to the AMF, where the registration request information includes the new SUPI.

S440: The AMF determines the AUSF based on the second identification information.

In a possible implementation, the registration request message received by the AMF includes information in a format of an NAI "type1.rid678.schid0.useriduser17@nai.Sgc-nn.mnc<123>.mcc<456>.3gppnetwork.org", the AMF determines that content after "@" is homerealm, and homerealm indicates the home network of the second device, in other words, the second identification information. The AMF determines the home network of the second device based on the information, and selects the AUSF in the network.

S450: Perform an authentication/security procedure.

S460: The AMF sends registration response information to the first device.

Based on the foregoing solution, the access network device implements registration of the second device by obtaining the identification information corresponding to the terminal, the identification information corresponding to the home network of the terminal, and the identification information corresponding to the target network of the terminal, so that it can be ensured that the terminal accesses the network through the non-3GPP access network device, to improve working accuracy and efficiency of the contact network device. Further, this solution has a small modification on an existing device, and is convenient for promotion and deployment. In addition, the three pieces of identification information in this application may be combined into one piece of information for sending, to save resources.

FIG. 5 is a schematic of a communication method 500 according to this application. The method 400 may be applied to a scenario in which a terminal accesses a core network by using a non-3GPP connection. The method 500 may be performed by the terminal, an access network device, an AMF, and an authentication server function (authentication server function, AUSF) device, or may be performed by modules or units in the terminal, an access network device, an AMF, and an AUSF. In this application, the terminal is a terminal that can support the non-3GPP connection, and the access network device is a non-3GPP access network device. For example, the terminal may be an N5CW device, and the access network device may be a TWAN device. For ease of description, the non-3GPP access network device is referred to as a first device, the terminal that supports the non-3GPP connection is referred to as a second device, and the network that the second device needs to access through the first device is referred to as a target network below.

The method 500 may include at least a part of the following content.

S510: The second device sends first information to the first device, where the first information includes first identification information, second identification information, and third identification information, the first identification information indicates the second device, the second identification information indicates a home network of the second device, and the third identification information indicates the target network of the second device.

For specific descriptions of this step, refer to step S410. Details are not described herein again.

S520: The first device determines the AMF based on the third identification information.

For specific descriptions of this step, refer to step S420. Details are not described herein again.

S530: The first device sends first registration request information to the AMF, where the first registration request information includes the first identification information, the second identification information, and the third identification information.

S540: The AMF determines the AUSF based on the second identification information.

Specifically, the AMF parses the first registration request information, determines that the second device accesses the core network by using the non-3GPP connection, and determines the AUSF based on the identification information corresponding to the home network, in other words, determines the AUSF based on the second identification information in this embodiment of this application.

In a possible implementation, the AMF determines, based on two pieces of network identification information included in the first registration request information, whether the target network selected by the second device to access the home network.

For example, the first registration request information in this application includes an SUPI, and an NAI form of the SUPI is "homerealm!username@otherrealm". The SUPI includes two realm parts, and each realm part corresponds to one piece of network identification information. When homerealm corresponding to the second identification information and otherrealm corresponding to the third identification information are different, the AMF determines that the network selected by the second device to access and the home network are different, and selects the AUSF based on homerealm corresponding to the second identification information.

In this embodiment of this application, the AMF needs to determine, based on the first registration request information, whether the second device accesses the core network by using the non-3GPP connection.

In a possible implementation, the AMF determines, depending on whether the first registration request information includes information indicating that NAS signaling connection is not supported, whether the second device accesses the core network by using the non-3GPP connection. If determining that the first registration request information includes the information indicating that the NAS signaling connection is not supported, the AMF determines that the second device accesses the core network by using the non-3GPP connection; otherwise, the AMF determines that the second device does not access the core network by using the non-3GPP connection.

For example, the first registration request information in this application includes the SUPI, and the NAI form of the SUPI is "homerealm!username@otherrealm". homerealm and otherrealm include 5gc-nn, and 5gc-nn indicates that the NAS signaling connection is not supported. Therefore, the AMF determines that the second device accesses the core network by using the non-3GPP connection, and selects the AUSF based on homerealm corresponding to the second identification information.

S550: Perform an authentication/security procedure.

S560: The AMF sends first registration response information to the first device.

Based on the foregoing solution, the AMF may obtain the identification information of the corresponding home network, so that an authentication server function device can be selected and the terminal can be authenticated. This ensures that the terminal can access the network through the non-3GPP access network device, and improves a network access success rate and reliability.

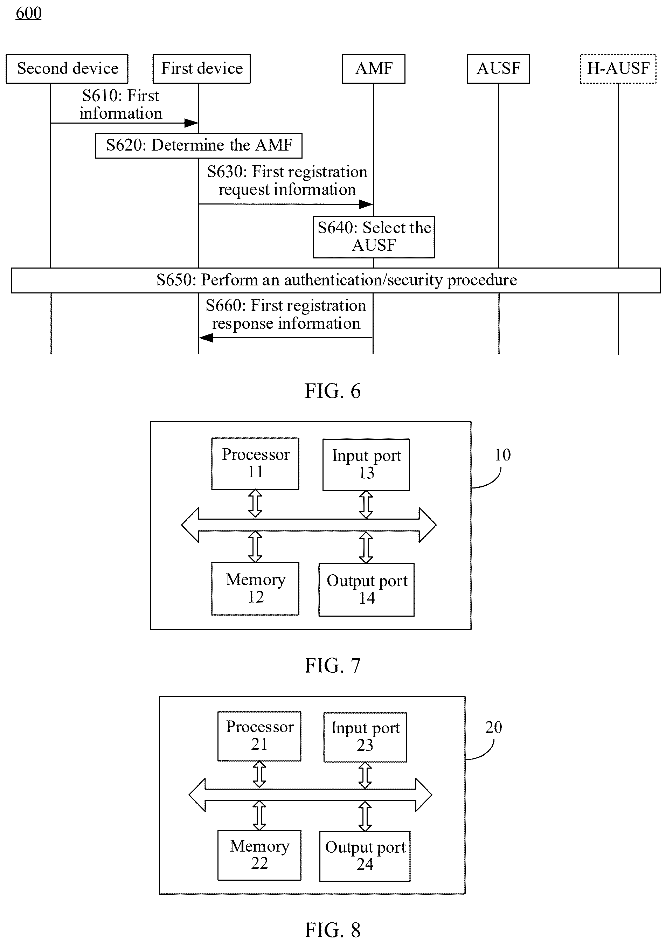

FIG. 6 is a schematic of a communication method 600 according to this application. The method 600 may be applied to a scenario in which a terminal accesses a core network by using a non-3GPP connection. The method 600 may be performed by the terminal, an access network device, an AMF, and an authentication server function (authentication server function, AUSF) device, or may be performed by modules or units in the terminal, an access network device, an AMF, and an AUSF. In this application, the terminal is a terminal that can support the non-3GPP connection, and the access network device is a non-3GPP access network device. For example, the terminal may be an N5CW device, and the access network device may be a TWAN device. For ease of description, the non-3GPP access network device is referred to as a first device, the terminal that supports the non-3GPP connection is referred to as a second device, and the network that the second device needs to access through the first device is referred to as a target network below.

The method 600 may include at least a part of the following content.

S610: The second device sends first information to the first device, where the first information includes first identification information, second identification information, and third identification information, the first identification information indicates the second device, the second identification information indicates a home network of the second device, and the third identification information indicates the target network of the second device.

For specific descriptions of this step, refer to step S410. Details are not described herein again.

S620: The first device determines the AMF based on the third identification information.

For specific descriptions of this step, refer to step S420. Details are not described herein again.

S630: The first device sends first registration request information to the AMF, where the first registration request information includes the first identification information, the second identification information, and the third identification information.

S640: The AMF selects the AUSF based on the first registration request information.

Specifically, the first registration request information includes two pieces of network identification information: the second identification information and the third identification information, and the AMF selects one of the two pieces of network identification information to determine the AUSF.

In a possible implementation, the first registration request information in this application includes an SUPI, and an NAI form of the SUPI is "homerealm!username@otherrealm". The AMF selects the corresponding AUSF by using a realm part at a rear location in the SUPI, in other words, determines the corresponding AUSF by using otherrealm included in the third identification information.

S650: Perform an authentication/security procedure.

Specifically, if the network indicated by the second identification information and the network indicated by the third identification information in S640 are a same network, in other words, a network identifier in the second identification information and a network identifier in the third identification information are the same, the AMF may select the AUSF in the home network, and the AUSF normally performs the authentication/security procedure. If the network indicated by the second identification information and the network indicated by the third identification information in S640 are not a same network, in other words, a network identifier in the second identification information and a network identifier in the third identification information are different, the AMF cannot select the AUSF in the home network, and the AUSF cannot perform the authentication/security procedure for the second device. The AUSF selects an H-AUSF, namely, an AUSF in the home network, based on the second identification information to complete authentication for the second device.

S660: The AMF sends first registration response information to the first device.

FIG. 7 and FIG. 8 are schematics of structures of possible apparatuses according to embodiments of this application. These apparatuses may be configured to implement the function of the terminal or the network device in the foregoing method embodiments. Therefore, beneficial effects of the foregoing method embodiments may also be implemented.

According to the foregoing method, FIG. 7 is a schematic of a communication apparatus 10 according to an embodiment of this application. As shown in FIG. 7, the apparatus 10 may be a terminal (for example, the foregoing second device), or may be a chip or a circuit, for example, a chip or a circuit that may be disposed in a terminal. The terminal may correspond to the first device in the foregoing methods.

The apparatus 10 may include a processor 11 (namely, an example of a processing unit) and a memory 12. The memory 12 is configured to store instructions. The processor 11 is configured to execute the instructions stored in the memory 12, to enable the apparatus 10 to implement the steps performed by the terminal (for example, the second device) in the methods corresponding to FIG. 1 to 5.

Further, the apparatus 10 may further include an input port 13 (namely, an example of a communication unit) and an output port 14 (namely, another example of the communication unit). Further, the processor 11, the memory 12, the input port 13, and the output port 14 may communicate with each other through an internal connection path, to transmit a control and/or data signal. The memory 12 is configured to store a computer program. The processor 11 may be configured to invoke and run the computer program from the memory 12, to control the input port 13 to receive a signal, and control the output port 14 to send a signal, to implement the steps performed by the terminal in the foregoing methods. The memory 12 may be integrated into the processor 11, or the memory 12 and the processor 11 may be disposed separately.

Optionally, if the apparatus 10 is the terminal, the input port 13 is a receiver, and the output port 14 is a transmitter. The receiver and the transmitter may be a same physical entity or different physical entities. When the receiver and the transmitter are a same physical entity, the receiver and the transmitter may be collectively referred to as a transceiver.

Optionally, if the apparatus 10 is the chip or the circuit, the input port 13 is an input interface, and the output port 14 is an output interface.

In an implementation, it may be considered that functions of the input port 13 and the output port 14 are implemented through a transceiver circuit or a dedicated transceiver chip. It may be considered that the processor 11 is implemented through a dedicated processing chip, a processing circuit, a processor, or a general-purpose chip.

In another implementation, it may be considered that the terminal provided in this embodiment of this application may be implemented in a form of a general-purpose computer. To be specific, program code for implementing functions of the processor 11, the input port 13, and the output port 14 is stored in the memory 12, and a general-purpose processor implements the function of the processor 11, the input port 13, and the output port 14 by executing the code in the memory 12.

The foregoing listed functions and actions of the modules or units in the communication apparatus 10 are merely described by way of example. The modules or units in the communication apparatus 10 may be configured to perform the actions or the processing processes performed by the terminal in the methods 400 and 500. To avoid repetition, detailed descriptions are omitted herein.

For concepts, explanations, detailed descriptions, and other steps of the apparatus 10 that are related to the technical solutions provided in embodiments of this application, refer to the descriptions of the content in the foregoing methods or other embodiments. Details are not described herein again.

According to the foregoing method, FIG. 8 is a schematic of a communication apparatus 20 according to an embodiment of this application. As shown in FIG. 8, the apparatus 20 may be a network device (for example, the first device, the AMF, or the AUSF), or may be a chip or a circuit, for example, a chip or a circuit that may be disposed in a network device. The network device corresponds to the network device (for example, the first device, the AMF, or the AUSF) in the foregoing methods. In addition, the network device in this application may include an access network device and a core network device.

The apparatus 20 may include a processor 21 (namely, an example of a processing unit) and a memory 22. The memory 22 is configured to store instructions. The processor 21 is configured to execute the instructions stored in the memory 22, to enable the apparatus 20 to implement the steps performed by the network device (for example, the first device, the AMF, or the AUSF) in the methods corresponding to FIG. 1 to 5.

Further, the apparatus 20 may further include an input port 23 (an example of a communication unit) and an output port 23 (another example of the processing unit). Still further, the processor 21, the memory 22, the input port 23, and the output port 24 may communicate with each other through an internal connection path, to transmit a control and/or data signal. The memory 22 is configured to store a computer program. The processor 21 may be configured to invoke and run the computer program from the memory 22, to control the input port 23 to receive a signal, control the output port 24 to send a signal, to implement the steps performed by the network device in the foregoing methods 400 and 500. The memory 22 may be integrated into the processor 21, or the memory 22 and the processor 21 may be disposed separately.

Optionally, if the apparatus 20 is the network device, the input port 23 is a receiver, and the output port 24 is a transmitter. The receiver and the transmitter may be a same physical entity or different physical entities. When the receiver and the transmitter are a same physical entity, the receiver and the transmitter may be collectively referred to as a transceiver.

Optionally, if the apparatus 20 is the chip or the circuit, the input port 23 is an input interface, and the output port 24 is an output interface.

Optionally, if the apparatus 20 is the chip or the circuit, the apparatus 20 may not include the memory 22, and the processor 21 may read instructions (a program or code) in a memory outside the chip to implement the function of the network device in the foregoing methods corresponding to FIG. 1 to 5.

In an implementation, it may be considered that functions of the input port 23 and the output port 24 are implemented through a transceiver circuit or a dedicated transceiver chip. It may be considered that the processor 21 is implemented through a dedicated processing chip, a processing circuit, a processor, or a general-purpose chip.

In another implementation, it may be considered that the network device provided in this embodiment of this application may be implemented in a form of a general-purpose computer. To be specific, program code for implementing functions of the processor 21, the input port 23, and the output port 24 is stored in the memory, and a general-purpose processor implements the function of the processor 21, the input port 23, and the output port 24 by executing the code in the memory.

The modules or the units of the communication apparatus 20 may be configured to perform the actions or the processing processes performed by the network device in the foregoing methods 400 and 500. To avoid repetition, detailed descriptions are omitted herein.

For concepts, explanations, detailed descriptions, and other steps of the apparatus 20 that are related to the technical solutions provided in embodiments of this application, refer to the descriptions of the content in the foregoing methods or other embodiments. Details are not described herein again.

According to the method provided in embodiments of this application, an embodiment of this application further provides a communication system, and the communication system includes the foregoing network device and one or more user equipments.

It should be understood that, in embodiments of this application, the terminal device or the network device includes a hardware layer, an operating system layer running above the hardware layer, and an application layer running above the operating system layer. The hardware layer includes hardware such as a central processing unit (Central Processing Unit, CPU), a memory management unit (Memory Management Unit, MMU), and a memory (which is also referred to as a main memory). An operating system may be any one or more computer operating systems that implement service processing through a process (Process), such as a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in embodiments of this application is not specifically limited in embodiments of this application, provided that a program that records code of the method provided in embodiments of this application can be run to perform communication according to the method provided in embodiments of this application. For example, the execution body of the method provided in embodiments of this application may be the terminal or the network device, or may be a functional module that is in the terminal or the network device and that can invoke the program and execute the program.

It should be noted that in embodiments of this application, a plurality of application programs may be run at this application layer. In this case, an application program for performing the communication methods in embodiments of this application and an application program configured to control a receiving end device to implement an action corresponding to received data may be different application programs.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, wherein the first device is a non-3rd generation partnership project 3GPP access network device, and comprising:
receiving first information from a second device, wherein the first information comprises first identification information, second identification information, and third identification information, the first identification information indicates the second device, the second identification information indicates a home network of the second device, and the third identification information indicates a target network of the second device;
determining an access and mobility management function device based on the third identification information;
sending registration request information to the access and mobility management function device, wherein the registration request information comprises the first identification information and the second identification information; and
receiving registration response information from the access and mobility management function device.

2. The method according to claim 1, wherein network identifiers of the target network and the home network are different.

3. The method according to claim 1 or 2, wherein the non-3rd generation partnership project 3GPP access network device comprises a trusted wireless local area network access network device.

4. The method according to claim 3, wherein the trusted wireless local area network access network device comprises:
a trusted wireless local area network access point device and a trusted wireless local area network interworking function device.

5. The method according to any one of claims 1 to 4, wherein the method further comprises:
generating the registration request information based on the first information.

6. The method according to any one of claims 1 to 5, wherein the first information further comprises:
first indication information, wherein the first indication information indicates that the second device accesses the target network through a connection that does not support non-access stratum NAS signaling.

7. The method according to any one of claims 1 to 6, wherein a format of the first information is a decorated network access identifier Decorated NAI.

8. The method according to any one of claims 1 to 7, wherein the registration request information comprises information in a format of a network access identifier NAI, and the information in the format of the network access identifier comprises the first identification information and the second identification information.

9. A communication method, comprising:
sending, by a second device, first information to a first device, wherein the first information comprises first identification information, second identification information, and third identification information, the first identification information indicates the second device, the second identification information indicates a home network of the second device, the third identification information indicates a target network of the second device, and the first device is a non-3rd generation partnership project 3GPP access network device; and
determining, by the first device, an access and mobility management function device based on the third identification information, and sending registration request information to the access and mobility management function device, wherein the registration request information comprises the first identification information and the second identification information.

10. The method according to claim 9, wherein the method further comprises:
determining, by the access and mobility management function device, an authentication server function device based on the second identification information, and authenticating the second device; and
sending, by the access and mobility management function device, registration response information to the first device.

11. The method according to claim 9 or 10, wherein network identifiers of the target network and the home network are different.

12. The method according to any one of claims 9 to 11, wherein the non-3rd generation partnership project 3GPP access network device comprises a trusted wireless local area network access network device.

13. The method according to claim 12, wherein the trusted wireless local area network access network device comprises:
a trusted wireless local area network access point device and a trusted wireless local area network interworking function device.

14. The method according to any one of claims 9 to 13, wherein the method further comprises:
generating, by the first device, the registration request information based on the first information.

15. The method according to any one of claims 9 to 14, wherein the first information further comprises:
first indication information, wherein the first indication information indicates that the second device accesses the target network through a connection that does not support non-access stratum NAS signaling.

16. The method according to any one of claims 9 to 15, wherein a format of the first information is a decorated network access identifier Decorated NAI.

17. The method according to any one of claims 9 to 16, wherein the registration request information comprises information in a format of a network access identifier NAI, and the information in the format of the network access identifier comprises the first identification information and the second identification information.

18. A communication method, applied to an access and mobility management function device, and comprising:
receiving first registration request information from a first device, wherein the first device is a non-3rd generation partnership project 3GPP access network device, the first registration request information is used to request to register a second device, the first registration request information comprises first identification information, second identification information, and third identification information, the first identification information indicates the second device, the second identification information indicates a home network of the second device, the third identification information indicates a target network of the second device, and the first device is the non-3rd generation partnership project 3GPP access network device;
determining an authentication server function device based on the second identification information, and authenticating the second device; and
sending first registration response information to the first device.

19. The method according to claim 18, wherein network identifiers of the target network and the home network are different.

20. A communication method, comprising:
sending, by a first device, first registration request information to an access and mobility management function device, wherein the first registration request information is used to request to register a second device, the first registration request information comprises first identification information, second identification information, and third identification information, the first identification information indicates the second device, the second identification information indicates a home network of the second device, the third identification information indicates a target network of the second device, and the first device is a non-3rd generation partnership project 3GPP access network device;
determining, by the access and mobility management function device, an authentication server function device based on the second identification information, and authenticating the second device; and
sending, by the access and mobility management function device, first registration response information to the first device.

21. The method according to claim 20, wherein network identifiers of the target network and the home network are different.

22. The method according to claim 20 or 21, wherein the non-3rd generation partnership project 3GPP access network device is a trusted wireless local area network access network device.

23. The method according to claim 22, wherein the trusted wireless local area network access network device comprises:
a trusted wireless local area network access point device and a trusted wireless local area network interworking function device.

24. The method according to any one of claims 20 to 23, wherein the method further comprises:
sending, by the second device, first information to the first device, wherein the first information comprises the first identification information, the second identification information, and the third identification information; and
generating, by the first device, the first registration request information based on the first information.

25. The method according to claim 24, wherein the first information further comprises:
first indication information, wherein the first indication information indicates that the second device accesses the target network through a connection that does not support non-access stratum NAS signaling.

26. A communication system, comprising a first device and a second device, wherein
the second device is configured to send first information to the first device, wherein the first information comprises first identification information, second identification information, and third identification information, the first identification information indicates the second device, the second identification information indicates a home network of the second device, the third identification information indicates a target network of the second device, and the first device is a non-3rd generation partnership project 3GPP access network device; and
the first device is configured to determine an access and mobility management function device based on the third identification information, and send registration request information to the access and mobility management function device, wherein the registration request information comprises the first identification information and the second identification information.

27. The system according to claim 26, wherein the system further comprises the access and mobility management function device;
the access and mobility management function device is configured to determine an authentication server function device based on the second identification information, and authenticate the second device; and
the access and mobility management function device is further configured to send registration response information to the first device.

28. A communication system, comprising a first device and an access and mobility management function device, wherein
the first device is configured to send first registration request information to the access and mobility management function device, wherein the first registration request information is used to request to register a second device, the first registration request information comprises first identification information, second identification information, and third identification information, the first identification information indicates the second device, the second identification information indicates a home network of the second device, the third identification information indicates a target network of the second device, and the first device is a non-3rd generation partnership project 3GPP access network device;
the access and mobility management function device is configured to determine an authentication server function device based on the second identification information, and authenticate the second device; and
the access and mobility management function device is further configured to send first registration response information to the first device.

29. The system according to claim 28, wherein the system further comprises the second device; and
the second device is configured to send first information to the first device, wherein the first information comprises the first identification information, the second identification information, and the third identification information.

30. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 25.

31. A chip, comprising a processor, configured to invoke a computer program from a memory and run the computer program, to enable a terminal on which the chip is installed to perform the method according to any one of claims 1 to 25.

32. A computer program, wherein when the computer program is executed by a communication apparatus, the method according to any one of claims 1 to 25 is implemented.

33. A computer-readable storage medium, wherein
the computer-readable storage medium stores a computer program, and when the computer program is run on a computer, the computer is enabled to perform the method according to any one of claims 1 to 25.
